# FASCICULE DE BREVET EUROPEEN

(11) **EP 0 500 810 B1**
(45) Date de publication et mention de la délivrance du brevet: **28.07.1993**
(21) Numéro de dépôt: 91902288.9
(22) Date de dépôt: 21.12.1990
(51) Int. Cl.: B65D 77/22, A23L 3/02, A23L 3/10

(54) **DISPOSITIF D'OBTURATION AUTOMATIQUE PAR EFFET THERMIQUE DE CONDITIONNEMENT POUR PREPARATIONS ALIMENTAIRES A CONSOMMATION DIFFEREE**
THERMISCH FUNKTIONIERENDE AUTOMATISCHE DICHTUNGSVORRICHTUNG ZUR VERPACKUNG VON NAHRUNGSMITTELZUBEREITUNGEN FÜR SPÄTEREN VERZEHR
AUTOMATIC OBTURATION DEVICE BY THERMAL CONDITIONING EFFECT FOR FOOD PREPARATIONS WITH DIFFERED CONSUMPTION

(30) Priorité: 27.12.1989 FR 8917528
(43) Date de publication de la demande: 02.09.1992
(73) Titulaire: SOCIETE DE CONSTRUCTIONS DE MATERIEL METALLIQUE ET ELECTRIQUE, F-38140 Renage (FR)
(72) Inventeur: BEIZERMANN, Michel, F-38500 Voiron (US)
(74) Mandataire: Bourgognon, Jean-Marie
(86) Numéro de dépôt international: FR9000937
(87) Numéro de publication internationale: WO9109789

(56) Documents cités:
- EP-A- 0 156 404
- DE-A- 234 414
- FR-A- 263 760
- FR-A- 2 224 365
- FR-A- 2 504 499
- FR-A- 2 629 060
- US-A- 3 741 427

## Description

L'objet de l'invention concerne un perfectionnement apporté à FR-A-2 629 060 concernant un dispositif d'obturation automatique par effet thermique de conditionnement pour préparations alimentaires à consommation différée.

Il est destiné à la réalisation d'une fermeture spécifique des barquettes en supprimant toute manipulation jusqu'à la consommation du produit en évitant totalement les risques de souillure et de contamination au cours des opérations de conditionnement, de manutention et de stockage.

Les plats cuisinés, dans l'industrie alimentaire, sont généralement conditionnés dans des emballages formés par des barquettes en feuille d'aluminium, en résine synthétique ou en complexes divers, tels que des cartons avec pelliculage de films.

Le dispositif suivant la présente invention a pour objet de permettre à l'air contenu dans le conditionnement de s'échapper pendant la cuisson lorsqu'il y a surpression, en évitant à l'air extérieur de pénétrer dans la barquette lors du refroidissement, lorsque la dépression se produit à l'intérieur, de sorte que les aliments sont pasteurisés à la cuisson dans un emballage stérile, ce qui assure une conservation de plusieurs semaines, même sans surgélation ou autres moyens complémentaires.

L'objet de l'invention est constitué par la combinaison d'une part, d'une languette articulée sur le bord de la barquette située à l'extérieur des barquettes lorsqu'elles sont empilées, et repliée vers l'extérieur de celles-ci pour prendre appui sur la paroi verticale après remplissage par les aliments et avant scellement du film obturateur, ladite languette articulée comportant sur sa face horizontale un siège perforé dans lequel est déposée une goutte de résine composite fusible ayant pour propriété de devenir poreuse à une température déterminée, d'autre part, d'un outil de scellement conçu pour simultanément souder le film obturateur tout autour de la barquette et tout autour du siège, et perforer le film à l'endroit précis où est située la goutte de résine composite fusible grâce à une pointe judicieusement située à cet effet sur l'outil de scellement.

Sur les dessins annexés, donnés à titre d'exemple non limitatif, d'une des formes de l'invention :

La figure 1 représente le dispositif en perspective.

La figure 2 est une coupe verticale, à une échelle différente, suivant les flèches A-A de la figure 1, montrant la languette articulée repliée.

La figure 3 montre deux barquettes empilées avec la languette articulée ouverte, représentées en coupe suivant les flèches A-A de la figure 1.

Les figures 4 et 5 représentent, respectivement en plan et en coupe suivant les flèches B-B, une variante du dispositif comportant un renflement de la paroi de la barquette servant de support à la languette articulée repliée.

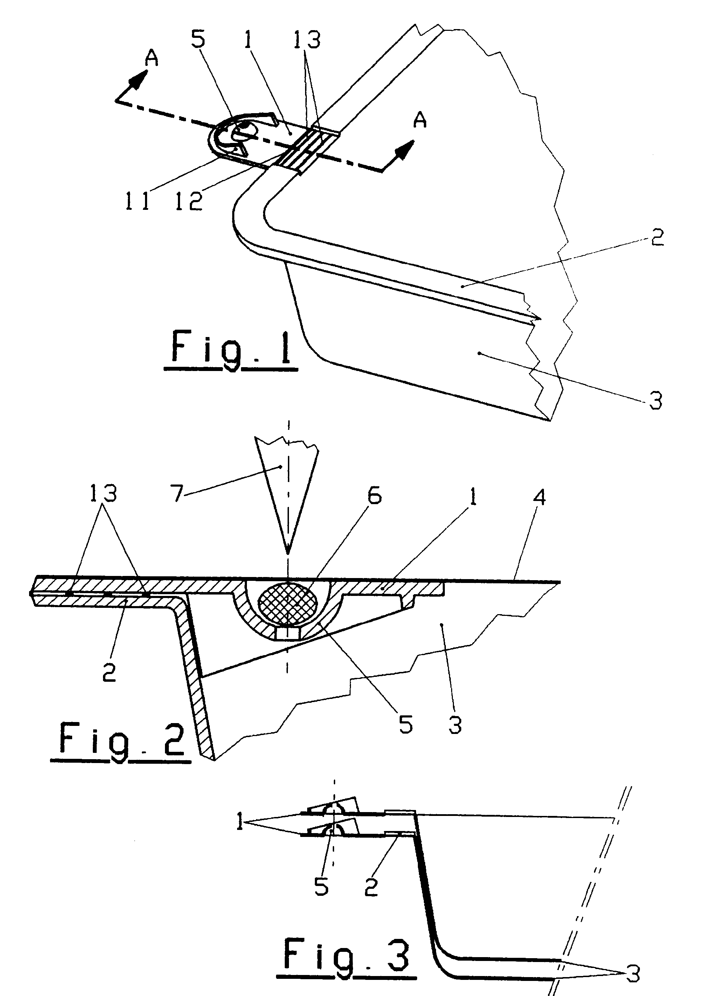

Le dispositif, figure 1 à 3, est constitué d'un clapet d'obturation thermique formé d'une languette 1 articulée sur le bord 2 de la barquette 3, située à l'extérieur de celle-ci lorsque les barquettes sont empilées.

La languette 1 est réalisée par un prolongement du bord 2 de la barquette situé dans le même plan que celui-ci lors du moulage de la barquette. L'articulation consiste en une rainure 12 pratiquée dans la matière et positionnée entre le bord 2 et la languette 1 et permettant à celle-ci de se replier sur ledit bord. Ce dernier est aminci à l'endroit où la languette reposera après repliage, cette partie amincie étant pourvue de nervures en relief 13 parallèles au bord destinées à améliorer l'étanchéité.

Après remplissage des barquettes par les aliments 10, et avant le scellement du film obturateur 4, la languette 1 est repliée vers l'intérieur de la barquette et vient prendre appui contre la paroi verticale par l'intermédiaire d'une nervure 11 en forme de U située sous la languette 1 repliée dont les extrémités sont déterminées pour venir buter contre ladite paroi verticale.

La languette 1 comporte sur sa face horizontale un siège perforé 5 dans lequel sera déposée une goutte de résine composite fusible 6 dont la propriété est de devenir poreuse à une température déterminée.

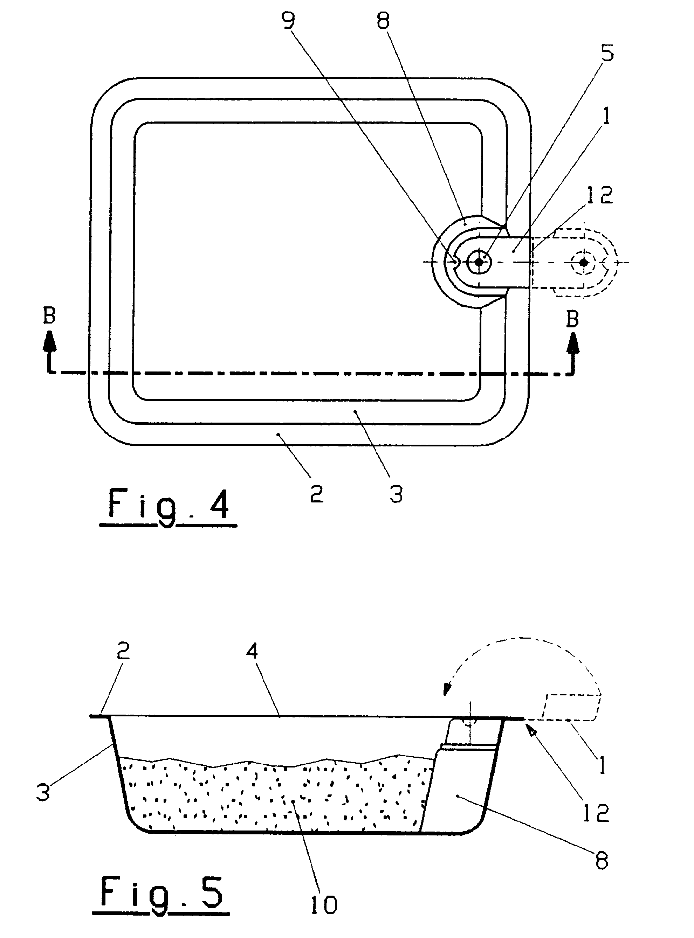

Au moment du scellement, le film obturateur 3 est soudé simultanément tout autour de la barquette et tout autour du siège perforé 5 par un outil de scellement comportant une pointe 7 venant perforer au même moment le film obturateur à l'endroit précis où est située la goutte de résine composite fusible 6. Dans une variante d'exécution illustrée par le figures 4 et 5, pour offrir plus de rigidité lors du scellement, la languette 1 vient prendre appui, lorsqu'elle est repliée, sur un renflement interne 8 de la paroi verticale de la barquette 3. Ce renflement débouche à la base de la barquette pour permettre le démoulage et est borgne et plat à sa partie supérieure pour former l'appui de la languette.

Dans ce cas, une ou plusieurs encoches 9 sont pratiquées sur le pourtour de la languette 1 pour permettre l'échappement de la vapeur d'eau vers le clapet thermique.

Ce dispositif présente l'avantage supplémentaire d'éviter à la résine composite fusible de couler sur les aliments lorsqu'elle devient fluide sous l'effet de la chaleur.

## Revendications

1. Dispositif d'obturation automatique par effet thermique de conditionnement pour préparations alimentaires à consommation différée, ayant pour objet un operculage, préférentiellement de barquettes et autres, par utilisation d'une part, des effets de dilatation et d'échappement d'air chaud ou de vapeurs lors des opérations de cuisson, et d'autre part, la contraction lors du refroidissement pour assurer par clapet thermique anti-retour l'obturation hermétique du conditionnement en supprimant les pollutions et pertes d'arôme se produisant en cours des opérations de fermeture, se caractérisant par la combinaison d'une part, d'une languette (1) articulée sur le bord (2) de la barquette (3), située à l'extérieur des barquettes lorsqu' elles sont empilées, et repliée vers l'intérieur de celles-ci pour prendre appui sur la paroi verticale après remplissage par les aliments (10) et avant scellement du film obturateur (4), ladite languette articulée comportant sur sa face horizontale un siège perforé (5) dans lequel est déposée une goutte de résine composite fusible (6) ayant pour propriété de devenir poreuse à une température déterminée, d'autre part, d'un outil de scellement conçu pour simultanément souder le film obturateur (4) tout autour de la barquette et tout autour du siège perforé (5), et percer le film obturateur (4) à l'endroit précis où est située la goutte de résine composite fusible (6) grâce à une pointe (7) judicieusement située à cet effet sur ledit outil de scellement.

2. Dispositif suivant la revendication 1, caractérisé par le fait que la languette (1) repliée vers l'intérieur de la barquette (3) vient prendre appui contre la paroi verticale par l'intermédiaire d'une nervure (11) en forme de U située sous ladite languette repliée et dont les extrémités sont déterminées pour venir buter contre ladite paroi verticale.

3. Dispositif suivant l'une quelconque des revendications précédentes, caractérisé par le fait que la languette (1) est réalisée par un prolongement du bord (2) de la barquette situé dans le même plan que celui-ci lors du moulage, l'articulation consistant en une rainure (12) pratiquée dans la matière et positionnée entre le bord (2) et la languette (1) et permettant à celle-ci de se replier sur ledit bord.

4. Dispositif suivant la revendication 3, caractérisé par le fait que le bord (2) est aminci à l'endroit où la languette (1) reposera après repliage, cette partie amincie étant pourvue de nervures en relief (13) parallèles au bord (2) et destinées à améliorer l'étanchéité.

5. Dispositif suivant l'une quelconque des revendications 1, 3 et 4, se caractérisant par le fait que la languette (1) vient prendre appui, lorsqu'elle est repliée, sur un renflement interne (8) de la paroi verticale de la barquette (3), ce renflement débouchant à la base de la barquette pour permettre le démoulage et étant borgne et plat à sa partie supérieure pour former l'appui de la languette.

6. Dispositif suivant la revendication 5, caractérisé par le fait qu'au moins une encoche (9) est pratiquée sur le pourtour de la languette (1) pour permettre l'échappement de la vapeur d'eau vers le siège perforé (5).

## Patentansprüche

1. Thermisch funktionierende automatische Dichtungsvorrichtung zur Verpackung von Nahrungsmittelzubereitungen für späteren Verzehr, die einen Deckelverschluß, vorzugsweise einer Schale oder dergleichen, zum Gegenstand hat durch Anwendung einerseits von Effekten der Dehnung und des Entweichens von warmer Luft oder Dämpfen beim Rochen und andererseits der Zusammenziehung beim Abkühlen, um durch eine thermische Verschlußklappe einen hermetischen Verschluß der Verpackung zu gewährleisten, um dadurch Verschmutzungen und Aromaverluste, die sich beim Verschließen ergeben können, zu verhindern, **gekennzeichnet** durch die Kombination einerseits einer Lasche (1), die gelenkig am Rand (2) einer Schale (3) angebracht ist und an der Außenseite der Schalen sich befindet, wenn sie aufeinandergestapelt sind und die zum Inneren derselben hin umgeklappt wird, um sich nach der Füllung mit den Nahrungsmitteln (10) und vor dem Verschließen des Verschlußfilms (4) an der vertikalen Wand der Schale abzustützen, wobei die besagte, gelenkig angebracht Lasche auf ihrer horizontalen Fläche einen gelochten Sitz (5) aufweist, in welchen ein Tropfen eines schmelzbaren Reaktionsharzes (6) abgelegt ist, das die Eigenschaften hat, bei einer bestimmten Temperatur porös zu werden und andererseits eines Verschließwerkzeugs, das entworfen ist, um gleichzeitig den Verschlußfilm (4) rings um die Schale und rings um den gelochten Sitz (5) zu verschweißen und den Verschluß (5,4) genau an der Stelle zu durchbohren, wo der Tropfen des schmelzbaren Reaktionsharzes (6) sich befindet, dank eines Stachels (7), der sinnvollerweise zu diesem Zweck an dem besagten Verschlußwerkzeug vorgesehen ist.

2. Vorrichtung nach Anspruch 1, dadurch **gekennzeichnet,** daß die zum Inneren der Schale (3) gefaltete Lasche (1) sich gegen die vertikale Wand mittels einer Rippe (11) in Form eines U abstützt, die sich unter der besagten gefalteten Lasche befindet und deren Enden zur Abstützung gegen die besagte vertikale Wand vorgesehen sind.

3. Vorrichtung nach einem der vorhergehenden Ansprüche, dadurch **gekennzeichnet,** daß die Lasche (1) gebildet ist durch eine Verlängerung des Randes (2) der Schale, die sich beim Gießen in der gleichen Ebene befindet, wie dieser, wobei die Gelenkverbindung durch eine in dem Material angebracht Rille (12) gebildet ist, die zwischen dem Rand (2) und der Lasche (1) sich befindet und dieser das Umklappen auf dem besagten Rand ermöglicht.

4. Vorrichtung nach Anspruch 3, dadurch **gekennzeichnet,** daß der Rand (2) etwas schmaler an der Stelle ist, wo die Lasche (1) nach dem Umklappen aufliegt, wobei dieser schmalere Bereich mit zum Rand (2) parallelen, erhabenen Rippen (13) versehen ist, die zum Verbessern der Dichtigkeit bestimmt sind.

5. Vorrichtung nach einem der Ansprüche 1, 3 und 4, dadurch **gekennzeichnet,** daß die Lasche (1), wenn sie umgeklappt worden ist, sich auf einer inneren Ausbauchung (8) der vertikalen Wand der Schale (3) abstützt, wobei diese Ausbauchung aus dem Boden der Schale austritt, um das Herausnehmen aus der Form zu ermöglichen, und hohl und in ihrem oberen Bereich flach ist, um eine Abstützung der Laschen zu bilden.

6. Vorrichtung nach Anspruch 5, dadurch **gekennzeichnet,** daß wenigstens eine Kerbe (9) auf dem Umfang der Lasche (1) angebracht ist, um das Entweichen von Wasserdampf zu dem gelochten Sitz (5) zu ermöglichen.

## Claims

1. Device for automatic sealing, by thermal effect, of packaging for food preparations for consumption at a later date, relating to the protective covering, preferably of trays and the like, by using on the one hand the effects of expansion and escape of hot air or vapours during the cooking operations and on the other hand the contraction during cooling in order to ensure, by means of a non-return thermal valve, hermetic sealing of the package whilst preventing the contamination and loss of flavour which occur during the sealing operations, characterised by a combination of, on the one hand, a tab (1) articulated on the edge (2) of the tray (3), situated on the outside of the trays when they are stacked, and folded towards the inside of the trays in order to abut on the vertical wall after the trays have been filled with food (10) and before the protective film (4) has been sealed, said articulated tab comprising on its horizontal surface a perforated seat (5) in which is placed a drop of fusible composite resin (6) which has the property of becoming porous at a predetermined temperature, and on the other hand a sealing tool designed simultaneously to weld the protective film (4) all around the tray and all around the perforated seat (5), and to pierce the protective film (4) at the precise point where the drop of fusible composite resin (6) is located, by means of a point (7) which is judiciously provided for this purpose on said sealing tool.

2. Device according to claim 1, characterised in that the tab (1) folded towards the inside of the tray (3) abuts on the vertical wall via a U-shaped rib (11) located under said folded-back tab, the ends of said rib being arranged so as to abut on said vertical wall.

3. Device according to any of the preceding claims, characterised in that the tab (1) is formed by an extension of the edge (2) of the tray located in the same plane as said tray during the moulding operation, the articulation consisting of a groove (12) formed in the material and positioned between the edge (2) and the tab (1) and enabling the latter to be folded back onto said edge.

4. Device according to claim 3, characterised in that the edge (2) is thinner at the point where the tab (1) will rest after being folded back, this thinner part being provided with protruding ribs (13) parallel to the edge (2) and intended to improve the seal.

5. Device according to any of claims 1, 3 and 4, characterised in that the tab (1), when folded back, abuts on an internal bulge (8) in the vertical wall of the tray (3), this bulge opening out at the base of the tray to allow unmoulding and being continuous and flat in its upper part in order to form an abutment for the tab.

6. Device according to claim 5, characterised in that at least one notch (9) is provided on the periphery of the tab (1) to allow steam to escape towards the perforated seat (5).
